# EUROPÄISCHE PATENTSCHRIFT

(11) **EP 1 886 366 B1**
(45) Veröffentlichungstag und Bekanntmachung des Hinweises auf die Patenterteilung: **29.07.2009**
(21) Anmeldenummer: 06753823.1
(22) Anmeldetag: 24.05.2006
(51) Int. Cl.: H01M 4/21, H01M 2/10

(54) **VERFAHREN ZUR HERSTELLUNG, REIFUNG UND TROCKNUNG VON NEGATIVEN UND POSITIVEN PLATTEN FÜR BLEIAKKUMULATOREN**
METHOD FOR PRODUCING, MATURING AND DRYING NEGATIVE AND POSITIVE PLATES FOR LEAD ACCUMULATORS
PROCEDE DE PRODUCTION, DE MATURATION, ET DE SECHAGE DE PLAQUES NEGATIVES ET POSITIVES CONÇUES POUR DES ACCUMULATEURS AU PLOMB

(30) Priorität: 28.05.2005 DE 102005024526
(43) Veröffentlichungstag der Anmeldung: 13.02.2008
(73) Patentinhaber: Bernd Münstermann GmbH & Co. KG, 48291 Telgte (DE); Nitsche, Werner, 59558 Lippstadt (DE)
(72) Erfinder: SCHWINHORST, Uwe, 48231 Warendorf (DE); NITSCHE, Werner, 59558 Lippstadt (DE)
(74) Vertreter: Linnemann, Winfried
(86) Internationale Anmeldenummer: PCT/EP2006/004921
(87) Internationale Veröffentlichungsnummer: WO 2006/128621

(56) Entgegenhaltungen:
- GB-A- 1 163 082
- JP-A- 10 149 815
- JP-A- 2002 313 333
- US-A- 5 384 217
- US-A1- 2004 121 233

## Beschreibung

Die vorliegende Erfindung betrifft ein Verfahren zur Herstellung, Reifung und Trocknung von negativen und positiven Platten für Bleiakkumulatoren, wobei zunächst in einem Pastierschritt die Platten durch Einbringen von aus den Hauptinhaltsstoffen Bleioxid, Wasser und Schwefelsäure bestehender Bleipaste als aktive Masse in einen Elektrodenträger gefertigt werden, wobei die Platten unmittelbar aneinander anliegend in Stapeln angeordnet werden und wobei die Platten bei Temperaturen oberhalb von 70°C unter Aufrechterhaltung einer eine spontane Oxidation der Bleioxide vermeidenden oder vermindernden Restfeuchte der aktiven Masse zu einem porösen vernetzten Gefüge aus 3-und/oder 4-basischen Bleisulfaten gereift werden, wobei die Porosität dadurch entsteht, dass die 3- und/oder 4-basischen Bleisulfate eine höhere Dichte als die das Ausgangsmaterial bildenden aktiven Massen haben.

Nach dem aus der einschlägigen Praxis bekannten Stand der Technik werden bei der Herstellung von Bleiakkumulatoren die aktiven Massen für die negativen und positiven Platten aus den Hauptinhaltsstoffen Bleioxid, Wasser und Schwefelsäure hergestellt. Diese Stoffe werden in einem Mischprozeß zu einer pastösen Bleipaste verarbeitet. Innerhalb des Mischprozesses werden den negativen aktiven Massen noch die üblicherweise als Spreizmittel bezeichneten Zusatzstoffe, im wesentlichen Bariumsulfat, Ruß sowie spezielle Formen von Lignin-Verbindungen und/oder Huminsäuren, zugegeben. Die negativen und positiven Platten werden durch Einbringen der negativen aktiven Masse bzw. der positiven aktiven Masse in einen Elektrodenträger gefertigt. Das Einbringen der pastösen Bleipaste in den Elektrodenträger wird als Pastierung bezeichnet und erfolgt üblicherweise maschinell auf entsprechenden Pastierlinien, die im Wesentlichen aus einer Pastiermaschine und einem nachfolgenden Vortrockner bestehen.

Der Vortrockner dient zur oberflächlichen Trocknung der Platten, um klebfreie und damit stapelbare Platten zu erhalten. Beim Abstapeln der Platten wird zur Vermeidung des Klebens der Platten üblicherweise eine Restfeuchte der aktiven Masse von weniger als 9 Gew.-% angestrebt.

Bei kontinuierlich hergestellten Elektrodenträgern werden auf die Ober- und Unterseite der gefertigten Platten Trennpapiere aufgebracht, die eine Anhebung der Restfeuchte auf bis ungefähr 12 Gew.-% gestatten.

Als Elektrodenträger werden üblicherweise Fallgußgitter, Streckmetallgitter oder kontinuierlich gegossene oder gestanzte Gitter verwendet.

Die Platten werden üblicherweise am Ende der Pastierlinie vorwiegend vollautomatisch, teils auch manuell, liegend abgestapelt und auf Paletten vertikal oder vorwiegend horizontal abgelegt. Im Fall gegossener Fallgußgitter werden Doppelplatten teilweise noch locker in Gestelle gehängt.

Die aktiven Massen werden in einem folgenden Prozeßschritt, der so genannten Reifung und Trocknung, zu einem porösen vernetzten Gefüge aus vorzugsweise 3-basischen und/oder 4-basischen Bleisulfat-Kristallen umgewandelt und es wird eine Anbindung der aktiven Masse an den Elektrodenträger durch eine Oxidation der Oberfläche des Elektrodenträgers erzeugt. Dieser Prozeßschritt bestimmt zu einem wesentlichen Teil durch die Güte der Vernetzung der 3-basischen bzw. 4-basischen Bleisulfat-Kristalle, durch die Höhe der Porosität der aktiven Masse sowie durch die Anbindung an den Elektrodenträger die elektrischen Leistungsdaten und die Lebensdauer des Bleiakkumulators.

Nach dem Stand der Technik erfolgt die Reifung und Trocknung nahezu ausschließlich in Chargenkammern, die eine Temperatur- und Feuchtigkeitssteuerung während der Reifephase gewährleisten und eine Trocknung während der Trocknungsphase.

Bei der Herstellung von Bleiakkumulatoren werden staubförmige Bleioxide mit einem nennenswerten Anteil nicht oxidierten Bleis eingesetzt. Die eingesetzten Bleioxide enthalten nicht oxidiertes Blei mit einem Anteil von üblicherweise 25 - 35 Gew.-%. Während der Reifung tritt eine exotherme Oxidation des Restbleis der verwendeten Bleioxide auf. Die exotherme Reaktion ist im wesentlichen von der Herstellstellmethode des Bleistaubes abhängig. Als Faustregel neigen Bleioxide, die nach dem Barton-Verfahren hergestellt werden, weniger stark zur spontanen Oxidation als Bleioxide aus Bleimühlen. Auch zwischen den Anlagen verschiedener Hersteller finden sich nennenswerte Unterschiede im Hinblick auf die spontane Oxidationsrate der Bleioxide.

Die spontane Oxidation der Bleioxide innerhalb der aktiven Massen in den gefertigten Elektrodenträgern findet stets statt, bevorzugt bei einem Feuchtigkeitsgehalt von 5 - 7 Gew.-% der aktiven Masse. Die aktive Masse neigt somit während der Reifung zur Oxidation. Die exotherme Reaktion durch die Oxidation erhöht ihrerseits die Austrocknung der aktiven Massen. Bei der Reifung ist deshalb sowohl die Beladezeit der Chargenkammern als auch die gesamte Reifezeit zur Ausbildung eines 3-basischen und/oder 4-basischen Bleisulfat-Kristallgerüstes möglichst kurz zu halten, um eine Austrocknung zu vermeiden, weil diese Austrocknung der Ausbildung eines stabilen Kristallgerüstes sowie einer guten chemischen Anbindung an den Elektrodenträger entgegenwirken würde.

Die üblichen Chargenkammern zur Reifung und Trocknung von Platten für Bleiakkumulatoren haben ein Fassungsvermögen zur Aufnahme einer mehrstündigen Produktionsmenge, üblicherweise von 8 bis 16 Stunden. Negative und positive Platten werden üblicherweise innerhalb von 16 bis 24 Stunden zu 3-basischen Bleisulfat-Kristallen gereift und anschließend 1 bis 3 Tage getrocknet.

Mit der Einführung von Elektrodenträgern auf der Basis von Ca-Legierungen für positive Platten hat die Reifung zu 4-basischen Bleisulfat-Kristallen zunehmend an Bedeutung gewonnen. 4-basische Kristallstrukturen treten nur bei Temperaturen oberhalb ca. 70°C·auf, werden bei hoher relativer Feuchte innerhalb von etwa 2 bis 6 Stunden gebildet, weisen jedoch sehr große Kristalle auf, die sich negativ auf die innere Oberfläche der porösen Elektroden auswirken und eine deutlich längere Formationszeit der Elektroden mit erhöhtem elektrischen Energiebedarf benötigen. Vorteilhafterweise zeigen positive Platten mit 4-basischen Bleisulfat-Kristallen jedoch eine verbesserte Lebensdauer sowie einen Schutz vor Passivierung bei Tiefentladung (Antimon-freier Effekt).

Bei der Herstellung der aktiven Masse für positive Platten kann durch Zugabe von mikronisiertem 4-basischem Bleisulfat die Größe der 4-basischen Kristalle gesteuert werden. Es lassen sich Kristalle vergleichbarer Größe wie bei 3-basischen Bleisulfaten herstellen. Unter dem Begriff des mikronisierten 4-basischen Bleisulfates wird auf Kristallgrößen von unter 1 µm zerkleinertes 4-basi-sches Bleisulfat unter Zusatz feinteiliger pyrogener Kieselsäure verstanden, was in dem Dokument WO2004/059772 A2 beschrieben ist. Der positiven aktiven Masse wird während der Herstellung 4-basisches mikronisiertes Bleisulfat zugegeben. Bei der anschließenden Reifung bei hohen Temperaturen, vorzugsweise in einer wasserdampfgesättigten Atmosphäre, bildet sich bereits innerhalb einer Stunde eine vollständige kleinkristalline 4-basische Kristallstruktur aus, was ebenfalls in dem Dokument WO2004/059772 A2 beschrieben ist.

Nach dem Stand der Technik ist die Schnellreifung von Platten für Bleiakkumulatoren im Fall von freiliegenden Oberflächen bekannt. In dem Dokument EP 0 949 700 B1 wird ein Verfahren beschrieben, in dem in einem dreistufigen Prozeß im kontinuierlichen Durchlauf Bleiplatten innerhalb einiger Stunden gereift und getrocknet werden. Es wird beschrieben, daß mittels des Einsatzes einer Klimamembran und mittels für eine gleichmäßige Behandlung freigehaltener Plattenoberflächen der Feuchtegehalt der Platten gesteuert wird und durch die freigehaltenen Oberflächen der Metallabbau des Restbleis erfolgen kann und eine Schnelltrocknung erfolgen kann. Eine wesentliche Voraussetzung für das Verfahren besteht darin, daß beide Plattenoberflächen für eine gleichmäßige Behandlung freigehalten und mit einer klimawirksamen Membran versehen werden, die Feuchtigkeiten transportieren und speichern kann. Als klimawirksame Membran wird als besonders vorteilhafte Lösung vorgeschlagen, den Separator zu verwenden, der Bestandteil der Bleiakkumulatoren ist.

Die EP 1 235 287 A1 zeigt ebenfalls ein Verfahren zur Reifung von positiven Bleiakkumulatorplatten, bei dem wesentlich ist, daß die Platten vereinzelt werden. In weiterer Ausgestaltung gemäß dem Anspruch 4 dieser Schrift ist vorgesehen, daß die Vereinzelung der Platten durch Trennung der Platten mittels einer Klimamembran erfolgt. Hiermit soll erreicht werden, daß eine Wasserdampfbehandlung zur Reifung der Platten nur für wenige Stunden erfolgen muß, wobei dies insbesondere darauf zurückgeführt wird, daß die Platten für den Reifungsprozeß vereinzelt werden. Dabei soll die Vereinzelung wenigstens während der Wasserdampfbehandlung erfolgen.

Ein Verfahren zur Trocknung der Platten bzw. der Plattenstapel mittels eines Umströmens der Platten durch ein Trocknungsgas zeigt die US 2004/0121233 A1. Das Trocknungsgas wird dabei durch Dampf gebildet, der aus Wasser innerhalb der Platten infolge deren Erwärmung zum Zweck der Trocknung entsteht. Bei diesem Verfahren ist es von Nachteil, dass die Erwärmung nur von außen nach innen fortschreitet, da die Wärme von außen zugeführt wird und die Wärmeleitung dann nur von außen nach innen erfolgen kann. Hieraus resultiert eine langsame Trocknung, die zu Schrumpfungen und Rissen in den Platten führen kann. Um diese Nachteile möglichst zu verringern, muss ein spezieller Trocknungstemperaturverlauf mit einer über mehrere Stunden ansteigenden Trocknungstemperatur eingehalten werden, wobei der Trocknungstemperaturverlauf für unterschiedliche Plattengeometrien jeweils angepasst werden muss.

Die Notwendigkeit, daß beide Plattenoberflächen freigehalten bzw. mit einer Klimamembran versehen werden müssen, ist bei der gängigen, weiter oben erläuterten Fertigungstechnologie nicht gegeben. Es ist vielmehr gängige Praxis, die Platten nach der Pastierung ohne eine Klimamembran und ohne Abstände zwischen den Platten abzustapeln. Aus diesem Grund kann die Technik der Schnellreifung von Platten gemäß EP 0 949 700 B1 oder gemäß EP 1 235 287 A1 ohne erhebliche Änderungen bezüglich der Anlagentechnik nicht eingesetzt werden. Die hohen Investitionskosten und die komplexe technische Realisierung für die Einbringung der Klimamembranen stehen einer Verbreitung der in der EP 0 949 700 B1 und in der EP 1 235 287 A1 beschriebenen Technologie entgegen.

Eine Möglichkeit, bei einer Abstapelung der Platten in Stapeln die Plattenoberflächen ohne die Einführung von Klimamembranen teilweise freizuhalten, besteht durch die Verwendung von Trägergestellen oder Rahmen, in denen die Platten mit im wesentlichen vertikaler Ausrichtung angeordnet werden. Dabei erfahren die Plattenstapel in diesen Trägergestellen oder Rahmen durch ein für das Be- und Entladen erforderliches Bewegungsspiel eine Auflockerung, die in gewissem Maße freiliegende Plattenoberflächen mit sehr kleinen Spalten erzeugt. Die Platten müssen zu diesem Zweck aufgerichtet werden, um die gewisse Auflockerung der danach auf dem Trägergestell oder Rahmen stehenden Platten zu erreichen. Die Abmessung der Plattenstapel muß daher geringer sein als die lichte Weite des Trägergestells oder Rahmens. Plattenstapel mit horizontal aufgestapelten Platten können hier nicht eingesetzt werden. Der Nachteil dieses Verfahrens besteht in der Notwendigkeit, Trägergestelle oder Rahmen zu verwenden, die auf die spezielle Plattengeometrie abgestimmt sein müssen. Ein Wechsel der Plattengeometrie bedingt unweigerlich auch einen Wechsel der Trägergestelle oder Rahmen oder die Verwendung und den Austausch von austauschbaren Einlagen in den Trägergestellen oder Rahmen.

Es stellt sich deshalb die Aufgabe, ein Verfahren der eingangs genannten Art zu schaffen, das die vorstehend dargelegten Nachteile des Standes der Technik vermeidet und mit dem bei einer hohen Wirtschaftlichkeit Platten mit verbesserten Eigenschaften produziert werden können.

Die Lösung der Aufgabe gelingt erfindungsgemäß mit einem Verfahren der eingangs genannten Art, das dadurch gekennzeichnet ist,
- daß die Platten unter Ausnutzung einer der aktiven Masse infolge der durch die Reifung entstandenen Porosität eigenen Durchlässigkeit und unter Ausnutzung einer zumindest einen Teil einer Trocknungswärme erzeugenden exothermen Oxidation von Restblei in der aktiven Masse im Plattenstapel durch Anlegen eines Über- oder Unterdrucks, der eine Druckdifferenz von mehr als 10 mbar zwischen einer Anströmseite und einer gegen die Anströmseite abgedichteten Abströmseite des Plattenstapels aufweist, mittels die aus der aktiven Masse bestehenden Platten durchströmenden sauerstoffhaltigen Gases auf eine gewünschte Endfeuchte mit einer eine Schrumpfung der Platten vermeidenden oder vermindernden Trocknungsgeschwindigkeit getrocknet werden.

Vorteilhafte Ausgestaltungen und Weiterbildungen des erfindungsgemäßen Verfahrens sind in den Unteransprüchen angegeben.

Mit der Erfindung wird vorteilhaft erreicht, daß positive wie negative Platten in Stapeln ohne den Einsatz von Klimamembranen, ohne die Notwendigkeit von freiliegenden Oberflächen und ohne Verwendung von Trägergestellen in einem kurzen Zeitraum gereift und getrocknet werden können. Der Erfindung liegt die Erkenntnis zugrunde, daß entgegen der gängigen Lehrmeinung negative und positive Platten für Bleiakkumulatoren eine verbleibende Durchlässigkeit aufweisen, die zum Zwecke der Oxidation des Restbleies sowie der Trocknung einen ausreichenden Durchtritt eines Gases bei Anlegen des erwähnten Über- oder Unterdruckes gewährleistet. Der Gasstrom durchströmt also das Material, aus dem die Platten bestehen. Diese Durchlässigkeit kann durch den angelegten Über- oder Unterdruck derart genutzt werden, daß eine Trocknung bis auf gewünschte geringe Restfeuchten wesentlich durch eine Oxidation des Restbleies in einem relativ kurzen Zeitraum gewährleistet ist. Die schnelle Trocknung auf eine geringe Restfeuchte durch die Oxidation des Restbleies unter Nutzung der Durchlässigkeit der aktiven Massen führt vorteilhaft zu einer Erhöhung der Porosität der negativen sowie positiven Platten und liefert rißfreie Platten.

Bei der erfindungsgemäßen Reifung der aktiven Masse bilden sich Kristalle in Form der 3- und/oder 4-basischen Bleisulfate aus der das Ausgangsmaterial bildenden Paste. Die Paste hat in der Praxis eine Dichte im Bereich zwischen etwa 3,8 und 4,4 g/cm³. 3-basisches Bleisulfat in Kristallform hat dagegen eine Dichte von 6,7 g/cm³ und 4-basisches Bleisulfat in Kristallform eine Dichte von 8,0 g/cm³. Dies bedeutet, daß bei der Reifung infolge der Dichterhöhung in den Kristallen vorteilhaft zwischen den Kristallen Freiräume entstehen, die zu der erwünschten Porosität führen, wobei die Porosität so groß ist, dass ein Gas durch das die Platten im Plattenstapel bildende Material hindurchgeleitet werden kann.

Erfindungsgemäß werden die Platten unmittelbar aneinander anliegend in Stapeln angeordnet und in diesem gestapelten Zustand gereift und getrocknet. Jeder Plattenstapel bildet also einen kompakten Körper, in welchem die einzelnen Platten ohne Freihaltung von Zwischenräumen angeordnet sind. Durch die erfindungsgemäß gestaltete Führung des Reifeprozesses ergibt sich eine Porosität der Platten, die für die Hindurchleitung eines Gases zum Zweck der Trocknung der Platten im Plattenstapel genutzt wird. Die Richtung der Durchströmung des Plattenstapels ist dabei im Prinzip beliebig. Unterschiedlich sind höchstens die Strömungswiderstände in verschiedenen Richtungen des Plattenstapels. Auf diese unterschiedlichen Strömungswiderstände kann durch eine angepaßte Änderung der Druckdifferenz reagiert werden, um stets einen ausreichenden Gasdurchsatz für die Trocknung zu erreichen.

Die konkrete Endfeuchte richtet sich nach dem Verwendungszweck der Platten, da für Platten in unterschiedlichen Batterien verschiedene Werte der Restfeuchte zweckmäßig sind. Bei trocken vorgeladenen Batterien werden die Platten nach der Reifung und Trocknung in Kassetten zur Formierung eingesetzt. Dabei ist zur Vermeidung von Stäuben bei der Beladung der Kassetten eine relativ hohe Restfeuchte von etwa 2 Gew.-% erwünscht. Im Unterschied dazu ist bei naß gelieferten üblichen PKW-Batterien eine möglichst niedrige und möglichst gleichmäßige Restfeuchte erwünscht, um möglichst geringe Schwankungen der End-Säuredichte der fertigen Batterie zu gewährleisten.

Die Reifung, d.h. die Ausbildung der 3- und/oder 4-basischen Bleisulfat-Kristalle erfolgt bei Temperaturen oberhalb von 70°C, vorzugsweise bei einer relativen Feuchte von über 80%. Vorzugsweise liegt die Temperatur sogar oberhalb von 80°C. Für den Wärmetransport wird bei der Reifung bevorzugt Wasserdampf benutzt, um eine zusätzliche Sauerstoffzufuhr zu vermeiden.

Die Reifung erfolgt über einem Zeitraum von wenigstens 30 Minuten. Da sich die Platten in Stapeln befinden, kann bereits für relative Luftfeuchten von 80% ein unerwünschtes Austrocknen der Platten vermieden werden. Bevorzugt ist eine Reifungszeit von 1 Stunde, die jedoch zur Verbesserung der Oberflächenkorrosion besonders beständiger Elektrodenträgerlegierungen, z.B. PbCaAg- oder PbSn-Legierungen, in Ausnahmefällen oder bei Vorliegen von Kristallisationsverzögerern, wie z.B. den Ligninsulfaten oder Huminsäuren, vorzugsweise bis zu 3 Stunden ausgedehnt werden kann. Es ist anlagentechnisch bevorzugt, daß für die Beheizung der Platten das Einleiten von Wasserdampf im Bodenbereich einer Reifekammer erfolgt. Auf eine erzwungene Zirkulation durch Gebläse oder erzwungene Konvektion wird hier vorzugsweise bewußt verzichtet, da dies zu einer ungewollten Austrocknung der Außenplatten des Plattenstapels führt.

Im Anschluß an die Reifung wird unmittelbar mit der erfindungsgemäßen Trocknung der Platten unter der Ausnutzung der Durchlässigkeit der aktiven Massen begonnen. Infolge der Durchlässigkeit der aktiven Massen wird die Zuführung von Sauerstoff zur Oxidation des freien Bleis in der aktiven Masse zu Bleioxid durch ein Druckgefälle von mehr als 10 mbar, vorzugsweise von mehr als 40 mbar, erreicht. Die exotherme Reaktion der Oxidation des Restbleis liefert eine wesentliche Komponente der notwendigen Energie zur Trocknung der Platten.

Als von Vorteil hat sich dabei die Verwendung von Druckluft gezeigt, die einerseits sehr trockene Luft liefert und andererseits die Aufrechterhaltung eines ausreichenden Sauerstoffgehalts gewährleistet.

Um einen ausreichenden Bleiabbau zu Bleioxid zu gewährleisten, wird zweckmäßig der Sauerstoffgehalt bei der Trocknung auf dem natürlichen Sauerstoffgehalt der Luft von ca. 20 Vol.-% gehalten, mindestens jedoch auf 15 Vol.-%. Hierbei ist auf einen ausreichenden Austausch von verbrauchter, sauerstoffärmerer Luft gegen Frischluft zu achten.

Die Temperatur wird bei der Trocknung bevorzugt über einen Zeitraum von ungefähr 1 Stunde in vorteilhafter Weise auf 50 - 70°C gehalten. In diesem Bereich wird ein optimaler Bleiabbau zu Bleioxid erreicht.

Bei Anreicherung des Sauerstoffgehalts der Luft, die durch die aktiven Massen hindurchgeleitet wird, auf oberhalb von 40 Vol.-% kann der für den Bleiabbau zu Bleioxid benötigte Zeitraum auf unter 30 Minuten verkürzt werden. Aus Kostengründen dürfte diese Variante des erfindungsgemäßen Verfahrens zwar derzeit von untergeordneter Bedeutung sein, kann aber in speziellen Fällen von Vorteil sein. Bei Anreicherung des Sauerstoffgehalts auf oberhalb von 40 Vol.-% kann die Trocknung ohne Lufterhitzer und ohne lufttechnische Anlagen, wie Druck- oder Unterdruckaggregate, allein durch die spontane Oxidation des Restbleis erfolgen. Dies ist für Bleistäube aus Mühlenproduktion mit hoher Neigung zur Oxidation von technischer Bedeutung.

Die Endtrocknung der Platten wird über einen vorteilhaft relativ kurzen Zeitraum von vorzugsweise ca. 30 Minuten bis 2 Stunden durch eine geeignete Druckdifferenz bei einer Temperatur, die mindestens dem Siedepunkt des Wasser entspricht und die bevorzugt bei Normaldruck auf Meereshöhe (über NN) knapp darüber bei 105 bis 115°C liegt, erreicht. Nach diesem Zeitraum liegen Endfeuchten von weniger als 0,5 Gew.-% Restfeuchte vor. Der Prozeßschritt der Endtrocknung kann je nach gewünschter Endfeuchte auch verkürzt werden oder in speziellen Fällen ganz entfallen. Bei Verwendung von Mühlenstäuben, die eine höhere Oxidationsneigung und einen hohen Restbleigehalt aufweisen, erfolgt die Endtrocknung üblicherweise in deutlich kürzerer Zeit als bei Platten, die aus Bleistäuben, die nach dem Barton-Prozeß erzeugt werden, gefertigt werden.

Das zuvor beschriebene Verfahren, das man aufgrund des geringen Zeitbedarfs als Schnellreifung und Schnelltrocknung bezeichnen kann, ist für sämtliche negativen und positiven Platten für Bleiakkumulatoren in Stapeln ohne eine Änderung der vorhandenen Anlagentechnik bei der Pastierung und Abstapelung der Platten anwendbar. Für Hochstrombatterien ist die Verwendung von mikronisiertem 4-basischen Bleisulfat besonders vorteilhaft, da durch dieses kleinkristalline 4-basische Bleisulfat-Kristalle bei positiven sowie negativen Platten mit hoher innerer Oberfläche garantiert werden.

Ein wichtiger Punkt der Erfindung ist die Erkenntnis, daß bei einer Druckdifferenz von minimal 10 mbar, in vorteilhafter Weise von minimal 40 mbar, die aktiven Massen von positiven sowie negativen Platten im Stapel eine ausreichende Durchlässigkeit für ein sauerstoffhaltiges Gas, wie Luft, aufweisen, um eine Trocknung im wesentlichen durch eine Oxidation des Restbleis auf Restfeuchten von ca. 2 Gew.-% zu gewährleisten.

Bei der Ausführung von technischen Anlagen für die Durchführung des Verfahrens ist darauf zu achten, daß keine Falschluft an den Plattenstapeln vorbeiströmen kann. Zu diesem Zweck sind entsprechende Maßnahmen zur Abdichtung vorzusehen.

Ein weiterer wichtiger Punkt der Erfindung ist die Erkenntnis, daß durch die schnelle Trocknung mittels der Oxidation und mittels der Ausnutzung der Gasdurchlässigkeit der aktiven Massen die Porosität der fertigen Platten um ca. 5 - 7 % gegenüber Platten aus einer herkömmlichen Chargenreifung oder gegenüber Platten, die gemäß der in der EP 0 949 700 B1 oder in der EP 1 235 287 A1 genannten Methode gereift sind, erhöht ist. Untersuchungen haben gezeigt, daß während der langsamen Trocknung über einen Zeitraum von einem Tag in Chargenkammern oder bei Trocknung von vereinzelten Platten ein Trocknungsverlust zum Schrumpfen der aktiven Masse führt, was die Porosität verringert. Bei schneller Trocknung durch Oxidation des Restbleies innerhalb von z.B. 1 - 2 Stunden unter Nutzung der Gasdurchlässigkeit der aktiven Massen und unter Aufrechterhaltung eines geeigneten Druckgefälles sowie ausreichender Sauerstoffzufuhr, gemäß der obigen Beschreibung des erfindungsgemäßen Verfahrens, tritt dagegen kein Trocknungsverlust, der zum Schrumpfen der aktiven Massen führt, auf. Visuell zeigen die aktiven Massen von nach herkömmlichen, nicht erfindungsgemäßen Verfahren hergestellten Platten Risse, vorzugsweise im Bereich des Trägergerüstes des Elektrodenträgers. Besonders deutlich sichtbar sind die Risse bei den aktiven Massen der negativen Platten, die im allgemeinen infolge der enthaltenen Spreizmittel alkalischer sind und eine höhere Dichte aufweisen als positive Platten. Beim erfindungsgemäßen Verfahren werden dagegen aufgrund des fehlenden Trocknungsverlustes rißfreie Platten erhalten und es ergibt sich zugleich eine höhere Porosität der negativen und positiven Massen.

Die vorliegende Erfindung bietet eine Reihe von wirtschaftlichen Vorteilen gegenüber dem Stand der Technik:

Durch die im Vergleich zum Stand der Technik aufgrund des fehlenden Trocknungsverlustes um 5 - 7 % höhere Porosität der aktiven Massen in den negativen und positiven Platten kann die aktive Masse pro Platte um nahezu den gleichen Faktor von 5 - 7 % bei Beibehaltung der elektrischen Eigenschaften reduziert werden, weil bei Hochstromanwendungen, z.B. bei Starterbatterien, nur die in den Poren gespeicherte Elektrolytmenge von entscheidender Bedeutung ist. Die Säuredichte in den Poren bestimmt die Klemmenspannung der Batterie. Der Säureaustausch ist bei Hochstromanwendungen von untergeordneter Bedeutung. Für die Kapazität des Bleiakkumulators ist ebenfalls die Porosität von Bedeutung, da die negative und die positive Platte bei der Entladung eine Volumenzunahme erfahren, die die Porosität verringert, bis die Poren zum Ende der Entladung nahezu kein freies Volumen mehr aufweisen. Die entnehmbare Energiemenge ist damit direkt von der Porosität abhängig.

Bei der Schnellreifung gemäß Erfindung werden nur kleine Reifekammern benötigt, so daß die Kosten für die Anschaffung geringer sind als für konventionelle Reife- und Trockenkammern. Die Kosten für Reife- und Trockenkammern hängen wesentlich etwa proportional von der Mantelfläche des umbauten Raumes ab.

Die Schnellreifung gemäß Erfindung ermöglicht einen kontinuierlichen Fertigungsfluß, wodurch Lagerflächen, Aufwendungen für Logistik sowie Zwischenlager entfallen können. Hierdurch können die Kosten für Logistik und Kapitalbindung verringert werden.

Die kurze Prozeßzeit ermöglicht einen hohen Materialumschlag. Selbst im Chargenbetrieb bei der Schnellreifung und Schnelltrocknung können die Platten nach der Pastierung nach spätestens 2 - 6 Stunden dem weiteren Fertigungsprozeß zugeführt werden. Eine Austrocknung der Platten durch Oxidation des Restbleies kann ausgeschlossen werden. Dies hat erhebliche positive Auswirkungen auf die Plattenqualität. Die deutlich geringere Schwankung in der Plattenqualität führt erfahrungsgemäß zu einer Masseeinsparung von ca. 3%.

Der erfindungsgemäß effektiv geführte und deutlich verbesserte Trocknungsprozeß, in dem die Oxidation des Restbleis gezielt geführt wird, ergibt eine Einsparung von wenigstens 20 % an eingesetzter Energie.

Für die Umsetzung des erfindungsgemäßen Verfahrens zur Reifung und Trocknung im Stapel bieten sich die im folgenden anhand einer Zeichnung erläuterten Realisierungsvorschläge an. Die Figuren der Zeichnung zeigen:
- Figur 1: mehrere freistehende Stapel von Platten in einer nur teilweise dargestellten Vorrichtung zur Hindurchleitung eines Gases durch die Platten im Stapel und
- Figur 2: mehrere Plattenstapel in einem Trägergestell, in welchen die Plattenstapel durch eine hier nicht gezeigte Vorrichtung zur Hindurchleitung eines Gases durch die Platten im Stapel transportierbar sind.

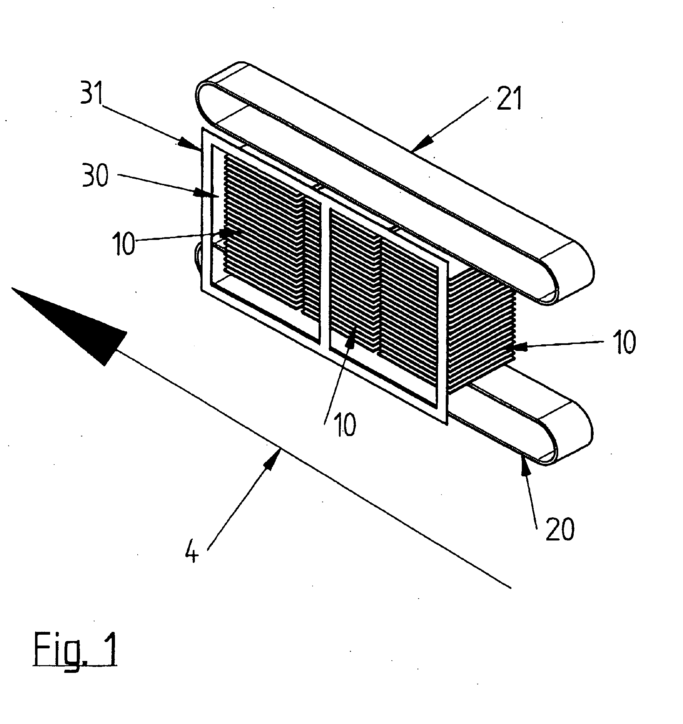

Gemäß Figur 1 werden mehrere nebeneinander angeordnete Plattenstapel 10 mit dicht an dicht auf einem Förderband 20 stehenden Platten zwangsmäßig einem quer gerichteten Differenzdruckgefälle' ausgesetzt. Im dargestellten Beispiel liegen die Platten mit horizontaler Ausrichtung dicht aufeinander; alternativ können sie auch in vertikaler Ausrichtung dicht nebeneinander liegen

Der Pfeil 4 gibt die Förderrichtung des Förderbandes 20 an; das Differenzdruckgefälle verläuft senkrecht dazu. Es werden dabei keine Trägergestelle oder Rahmen benötigt. Die Erzielung eines ausreichenden Druckgefälles kann durch ein mitlaufendes flexibles Fixier- und Abdichtband 21 sowie eine Öffnungsblende 31 mit Öffnungsflächen 30 für einen Luftdurchtritt gewährleistet werden.

Bei der technischen Ausführung ist besonders vorteilhaft, daß in diesem vorgeschlagenen Realisierungsbeispiel keine Umrüstung der Anlage bei wechselnden Plattenabmessungen erfolgen muß. Die Plattenstapel 10 werden unmittelbar nach der Pastierung der Reifungs- und Trocknungsanlage übergeben.

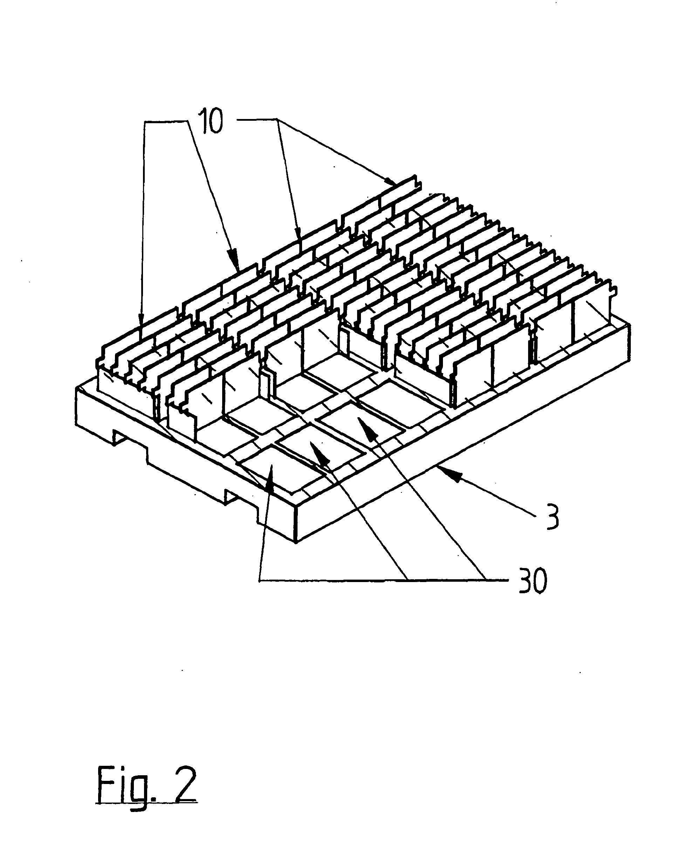

Gemäß Figur 2 kann das Verfahren auch für Plattenstapel 10, die stehend oder liegend in Paletten oder Trägergestellen 3 angeordnet sind, angewendet werden. Dabei müssen die Paletten oder Trägergestelle 3 im An- und Abströmbereich über eine ausreichende Öffnungsfläche 30 verfügen. Bei der Verwendung von Trägergestellen 3 ist außerdem darauf zu achten, daß keine Auflockerung der Plattenstapel 10 erfolgen kann. Hierzu können z.B. Klemmeinrichtungen eingesetzt werden, die die Platten in den Stapeln 10 ausreichend fest und dicht zusammenhalten. In der zeichnerischen Darstellung in Figur 2 sind die Platten aus Gründen der Erkennbarkeit mit Abstand zueinander dargestellt; in der Realität liegen die Platten dicht aneinander an, wie in Figur 1 gezeigt.

Die Anlagen zur Ausführung des Verfahrens sind sowohl als Durchlauf- als auch als Chargenanlagen ausführbar.

## Patentansprüche

1. Verfahren zur Herstellung, Reifung und Trocknung von negativen und positiven Platten (1) für Bleiakkumulatoren, wobei zunächst in einem Pastierschritt die Platten (1) durch Einbringen von aus den Hauptinhaltsstoffen Bleioxid, Wasser und Schwefelsäure bestehender Bleipaste als aktive Masse in einen Elektrodenträger gefertigt werden, wobei die Platten (1) unmittelbar aneinander anliegend in Stapeln (10) angeordnet werden und wobei die Platten (1) bei Temperaturen oberhalb von 70°C unter Aufrechterhaltung einer eine spontane Oxidation der Bleioxide vermeidenden oder vermindernden Restfeuchte der aktiven Masse zu einem porösen vernetzten Gefüge aus 3- und/oder 4-basischen Bleisulfaten gereift werden, wobei die Porosität dadurch entsteht, dass die 3- und/oder 4-basischen Bleisulfate eine höhere Dichte als die das Ausgangsmaterial bildenden aktiven Massen haben,
**dadurch gekennzeichnet,**
**dass** die Platten (1) unter Ausnutzung einer der aktiven Masse infolge der durch die Reifung entstandenen Porosität eigenen Durchlässigkeit und unter Ausnutzung einer zumindest einen Teil einer Trocknungswärme erzeugenden exothermen Oxidation von Restblei in der aktiven Masse im Plattenstapel (10) durch Anlegen eines Über- oder Unterdrucks, der eine Druckdifferenz von mehr als 10 mbar zwischen einer Anströmseite und einer gegen die Anströmseite abgedichteten Abströmseite des Plattenstapels (10) aufweist, mittels die aus der aktiven Masse bestehenden Platten (1) durchströmenden sauerstoffhaltigen Gases auf eine gewünschte Endfeuchte mit einer eine Schrumpfung der Platten (1) vermeidenden oder vermindernden Trocknungsgeschwindigkeit getrocknet werden.

2. Verfahren nach Anspruch 1, **dadurch gekennzeichnet, daß** die Platten (1) bei Temperaturen oberhalb von 80°C gereift werden.

3. Verfahren nach Anspruch 1 oder 2, **dadurch gekennzeichnet, daß** die Platten (1) bei der Reifung durch Einleiten von Wasserdampf erwärmt werden.

4. Verfahren nach einem der Ansprüche 1 bis 3, **dadurch gekennzeichnet, daß** die Platten (1) über einen Zeitraum von wenigstens 30 Minuten gereift werden.

5. Verfahren nach Anspruch 4, **dadurch gekennzeichnet, daß** die Platten (1) über einen Zeitraum von 1 Stunde gereift werden.

6. Verfahren nach Anspruch 4, **dadurch gekennzeichnet, daß** die Platten (1) über einen Zeitraum von 30 Minuten bis zu 3 Stunden gereift werden.

7. Verfahren nach einem der vorangehenden Ansprüche, **dadurch gekennzeichnet, daß** vor dem Pastierschritt den aktiven Massen für die positiven und/oder negativen Platten (1) mikronisiertes 4-basisches Bleisulfat zugeben wird, wodurch die aktiven Massen vollständig gemäß stöchiometrischer Zusammensetzung zu 4-basischem Bleisulfat mit definierten Kristallgrößen gereift werden.

8. Verfahren nach einem der vorangehenden Ansprüche, **dadurch gekennzeichnet, daß** die Platten (1) mit Luft als sauerstoffhaltiges Gas getrocknet werden.

9. Verfahren nach Anspruch 8, **dadurch gekennzeichnet, daß** die Luft eine Temperatur von 50 - 70°C hat.

10. Verfahren nach Anspruch 8 oder 9, **dadurch gekennzeichnet, daß** die Luft einen Sauerstoffgehalt von mehr als 15 Vol.-% hat.

11. Verfahren nach einem der vorangehenden Ansprüche, **dadurch gekennzeichnet, daß** die Druckdifferenz mehr als 40 mbar beträgt.

12. Verfahren nach einem der Ansprüche 8 bis 11, **dadurch gekennzeichnet, daß** der Luft für die Trocknung der Platten (1) trockene Druckluft zugegeben wird.

13. Verfahren nach einem der Ansprüche 10 bis 12, **dadurch gekennzeichnet, daß** der Luft für die Trocknung der Platten (1) soviel Sauerstoff zugegeben wird, daß die Luft einen Sauerstoffgehalt von mehr als 20 Vol.-% hat.

14. Verfahren nach Anspruch 13, **dadurch gekennzeichnet, daß** der Luft für die Trocknung der Platten (1') soviel Sauerstoff zugegeben wird, daß die Luft einen Sauerstoffgehalt von mehr als 60 Vol.-% hat.

15. Verfahren nach einem der Ansprüche 9 bis 14, **dadurch gekennzeichnet, daß** die Platten (1) in einem abschließenden Endtrocknungsschritt mittels die aktive Masse durchströmender Luft einer Temperatur, die mindestens der Siedetemperatur des Wassers entspricht, getrocknet werden.

16. Verfahren nach Anspruch 15, **dadurch gekennzeichnet, daß** die Platten (1) in dem abschließenden Endtrocknungsschritt bis zu einer Restfeuchte der aktiven Masse von unter 0,5 Gew.-% getrocknet werden.

## Claims

1. A method for producing, maturing and drying negative and positive plates (1) for lead accumulators, initially, in a pasting step, the plates (1) being produced by bringing the lead paste, consisting of the main components of lead oxide, water and sulfuric acid, as active composition into an electrode support, the plates (1) being disposed in direct contact with one another in stacks (10) and matured at temperatures above 70°C while a residual moisture content of the active composition is maintained, which avoids or reduces any spontaneous oxidation of the lead oxides, into a porous, cross linked structure of tribasic and/or tetrabasic lead sulfates, the porosity arising owing to the fact that the tribasic and/or tetrabasic lead sulfates have a higher density than the active compositions forming the starting material,
**characterized in that**
the plates (1), utilizing a permeability of the active composition resulting from the porosity that has developed during the maturing and utilizing an exothermic oxidation of residual lead in the active composition in the stack of plates (10), producing at least a portion of a drying heat, by the application of a pressure or vacuum, which has a pressure difference of more than 10 mbar between an inflow side and an outflow side of the stack of plates (10), which is sealed from the inflow side, are dried by means of the oxygen-containing gas, flowing through the plates (1) consisting of active composition, to a desired final moisture content at a drying rate, which avoids or reduces shrinkage of the plates (1).

2. The method of claim 1, **characterized in that** the plates (1) are matured at temperatures above 80°C.

3. The method of claims 1 or 2, **characterized in that** the plates (1) are heated during the maturing by passing in steam.

4. The method of one of the claims 1 to 3, **characterized in that** the plates (1) are matured over a period of at least 30 minutes.

5. The method of claim 4, **characterized in that** the plates (1) are matured over a period of 1 hour.

6. The method of claim 4, **characterized in that** the plates (1) are matured over a period of 30 minutes to 3 hours.

7. The method of one of the preceding claims, **characterized in that,** before the pasting step, micronized tetrabasic lead sulfate is added to the active composition for the positive and/or negative plates (1), as a result of which the active composition is matured completely in accordance with the stoichiometric composition to the tetrabasic lead sulfate with defined crystal sizes.

8. The method of one of the preceding claims, **characterized in that** the plates (1) are dried with air as oxygen-containing gas.

9. The method of claim 8, **characterized in that** the air has a temperature of 50° to 70°C.

10. The method of claims 8 or 9, **characterized in that** the air has an oxygen content of more than 15% by volume.

11. The method of one of the preceding claims, **characterized in that** the pressure difference is more than 40 mbar.

12. The method of one of the claims 8 to 11, **characterized in that** dry compressed air is added to the air for the drying of the plates (1).

13. The method of one of the claims 10 to 12, **characterized in that** sufficient oxygen is added to the air for drying the plates (1), so that the air has an oxygen content of more than 20% by volume.

14. The method of claim 13, **characterized in that** sufficient oxygen is added to the air for drying the plates (1), so that the air has an oxygen content of more than 60% by volume.

15. The method of one of the claims 9 to 14, **characterized in that** the plates (1) are dried in a subsequent final drying step by means of air, flowing through the active composition at a temperature, which corresponds at least to the boiling point of water.

16. The method of claim 15, **characterized in that** the plates (1) are dried in the subsequent step of the final drying to a residual moisture content of the active composition of less than 0.5% by weight.

## Revendications

1. Procédé de production, de maturation et de séchage de plaques négatives et positives (1) conçues pour des accumulateurs au plomb, les plaques (1) étant, dans un premier temps, finies lors d'une étape d'empâtage par dépôt d'une pâte de plomb se composant principalement d'oxyde de plomb, d'eau et d'acide sulfurique sous la forme d'une masse active dans un support d'électrodes, les plaques (1) étant agencées directement de façon adjacente l'une par rapport à l'autre dans les empilements (10) et les plaques (1) étant amenées à maturation à des températures supérieures à 70 °C en maintenant une humidité résiduelle réduisant ou évitant une oxydation spontanée des oxydes de plomb de la masse active pour obtenir un assemblage réticulé poreux constitué des sulfates de plomb (III) et/ou (IV) basiques, la porosité étant due à la plus forte densité des sulfates de plomb (III) et/ou (IV) basiques par rapport aux masses actives formant le matériau de départ,
**caractérisé en ce que,**
les plaques (1) sont séchées jusqu'à une humidité libre restante à une vitesse de séchage réduisant ou limitant le retrait des plaques (1) en utilisant une perméabilité propre à la masse active et consécutive à la porosité engendrée par la maturation et en utilisant une oxydation exothermique du plomb résiduel produisant au moins une partie d'une chaleur de séchage dans la masse active dans l'empilement des plaques (10) par application d'une surpression ou d'une sous-pression qui présente un écart de pression supérieur à 10 mbar entre un côté aspiration et un côté écoulement de l'empilement de plaques (10) isolé du côté aspiration au moyen de gaz contenant de l'oxygène s'écoulant à travers les plaques se composant de la masse active.

2. Procédé selon la revendication 1 **caractérisé en ce que** les plaques sont amenées à maturation à des températures supérieures à 80 °C.

3. Procédé selon la revendication 1 ou 2 **caractérisé en ce que** les plaques (1) sont réchauffées lors de la maturation par l'introduction de vapeur d'eau.

4. Procédé selon l'une quelconque des revendications 1 à 3 **caractérisé en ce que** les plaques (1) sont amenées à maturation sur une période de temps d'au moins 30 minutes.

5. Procédé selon la revendication 4 **caractérisé en ce que** les plaques (1) sont amenées à maturation sur une période de temps de 1 heure.

6. Procédé selon la revendication 4 **caractérisé en ce que** les plaques (1) sont amenées à maturation sur une période de temps allant de 30 minutes à 3 heures.

7. Procédé selon l'une quelconque des revendications précédentes **caractérisé en ce que** du sulfate de plomb (IV) basique micronisé est ajouté aux masses actives pour les plaques positives et / ou négatives (1) avant l'étape d'empâtage, grâce à quoi les masses actives sont totalement amenées à maturation selon la composition stoechiométrique en sulfate de plomb (IV) basique avec une taille de cristaux définie.

8. Procédé selon l'une quelconque des revendications précédentes **caractérisé en ce que** les plaques (1) sont séchées avec de l'air utilisé comme gaz contenant de l'oxygène.

9. Procédé selon la revendication 8 **caractérisé en ce que** l'air est à une température comprise entre 50 et 70 °C.

10. Procédé selon la revendication 8 ou 9 **caractérisé en ce que** l'air présente une teneur en oxygène supérieure à 15 % en volume.

11. Procédé selon l'une quelconque des revendications précédentes **caractérisé en ce que** l'écart de pression est supérieur à 40 mbar.

12. Procédé selon l'une quelconque des revendications de 8 à 11 **caractérisé en ce que** de l'air comprimé sec est ajouté à l'air pour le séchage des plaques (1).

13. Procédé selon l'une quelconque des revendications 10 à 12 **caractérisé en ce que** de l'oxygène est ajouté à l'air pour le séchage des plaques (1) en une quantité telle que l'air présente une teneur en oxygène supérieure à 20 % en volume.

14. Procédé selon la revendication 13 **caractérisé en ce que** de l'oxygène est ajouté à l'air pour le séchage des plaques (1) en une quantité telle que l'air présente une teneur en oxygène supérieure à 60 % en volume.

15. Procédé selon l'une quelconque des revendications 9 à 14 **caractérisé en ce que** les plaques (1) sont séchées lors d'une dernière étape de séchage finale au moyen d'air s'écoulant au travers de la masse active, à une température correspondant au moins à la température d'ébullition de l'eau.

16. Procédé selon la revendication 15 **caractérisé en ce que** les plaques (1) sont séchées lors de la dernière étape de séchage finale jusqu'à une humidité libre restante de la masse active de moins de 0,5 % en poids.
